# EUROPEAN PATENT SPECIFICATION

(11) **EP 4 169 780 B1**
(45) Date of publication and mention of the grant of the patent: **03.07.2024**
(21) Application number: 21847669.5
(22) Date of filing: 30.09.2021
(51) Int. Cl.: B60T 11/34, B60T 13/38, F16K 17/34, G05D 16/10, B60T 15/50

(54) **JUMP PRESSURE LIMITING MECHANISM AND AIR BRAKE SYSTEM**
SPRUNGDRUCKBEGRENZUNGSMECHANISMUS UND LUFTBREMSSYSTEM
MÉCANISME DE LIMITATION DE PRESSION DE SAUT ET SYSTÈME DE FREIN PNEUMATIQUE

(30) Priority: 13.09.2021 CN 202111069889
(43) Date of publication of application: 26.04.2023
(73) Proprietor: Meishan CRRC Brake Science & Technology Co., Ltd., Meishan City, Sichuan 620010 (CN)
(72) Inventor: YANG, Jinlong, Meishan Sichuan 620010 (CN); XIAO, Chen, Meishan Sichuan 620010 (CN); LV, Chao, Meishan Sichuan 620010 (CN); LIU, Yi, Meishan Sichuan 620010 (CN); LIU, Baohua, Meishan Sichuan 620010 (CN); SHEN, Yanfei, Meishan Sichuan 620010 (CN); YANG, Jianping, Meishan Sichuan 620010 (CN); NING, Bo, Meishan Sichuan 620010 (CN); LI, Guo, Meishan Sichuan 620010 (CN); SONG, Zhiyong, Meishan Sichuan 620010 (CN); WANG, Kaien, Meishan Sichuan 620010 (CN); TANG, Qi, Meishan Sichuan 620010 (CN)
(74) Representative: Fioravanti, Corrado
(86) International application number: PCT/CN2021/122242
(87) International publication number: WO 2023/035344

(56) References cited:
- EP-A1- 1 595 764
- CN-A- 108 473 122
- CN-A- 110 242 779
- CN-A- 111 895 150
- DE-A1- 2 514 257
- DE-A1- 10 046 976
- GB-A- 850 052
- GB-A- 2 137 320
- KR-B1- 101 313 802
- US-A- 3 727 994
- US-A1- 2008 047 619
- US-A1- 2008 047 619
- US-A1- 2018 170 339
- US-A1- 2018 251 110

## Description

### Technical Field

The present invention relates to the field of air brake systems, particularly to an inshot pressure limiting mechanism and an air brake system.

### Background Art

The speed, magnitude, and maximum value of braking force output of a railway vehicle brake system are all closely related to the braking requirements of the train, and also affect the running quality of the train.

An inshot pressure limiting mechanism in current railway vehicle brake devices adopts two valves in combination to realize pressure limiting, with a complicated structure, and a larger dimension.

GB850052A discloses a distributor valve means for use in a vacuum braking system suitable for railway vehicles.

### Summary

The present invention provides an inshot pressure limiting mechanism, which can address the problems that the pressure limiting mechanism needs to adopt two valves in combination, and has a larger dimension.

The present invention further provides an air brake system, which addresses the problems that the pressure limiting mechanism needs to adopt two valves in combination, and has a larger dimension.

The inshot pressure limiting mechanism according to the invention comprises a valve body, an inshot valve, an inflation valve, and a pressure limiting member.

The valve body is provided with an air inlet, a first chamber, a second chamber, and an air outlet, and both the first chamber and the second chamber may be in communication with the air inlet, and the first chamber is in communication with the second chamber.

The inshot valve is provided in the first chamber; the inflation valve is provided in the second chamber; the pressure limiting member is provided in the valve body, and a pressure limiting chamber is formed between the pressure limiting member and the valve body, the pressure limiting chamber is in communication with the air outlet, and both the pressure limiting chamber and the air outlet may be in communication with the second chamber.

The inshot valve and the inflation valve are both connected to the pressure limiting member, and the pressure limiting member is configured to drive the inshot valve and the inflation valve to move during pressure change in the pressure limiting chamber, so that the first chamber and the second chamber are simultaneously in an open state; or the first chamber is in a closed state, and the second chamber is in an open state; or the first chamber and the second chamber are simultaneously in a closed state.

According to the invention, the inshot pressure limiting mechanism further includes a contraction plug.

The valve body is further provided with a first passage and a second passage, wherein the first passage may communicate the air inlet with the first chamber, the second passage may communicate the air inlet with the second chamber; and the contraction plug may be provided in the second passage.

Optionally, the first chamber, the second chamber, and the pressure limiting chamber may be provided in sequence; and the inshot valve, the inflation valve, and the pressure limiting member may be connected in sequence.

The pressure limiting member may be configured to drive the inshot valve and the inflation valve to move along a direction from the first chamber to the pressure limiting chamber during the pressure increase in the pressure limiting chamber, or the pressure limiting member may be configured to drive the inshot valve and the inflation valve to move along a direction from the pressure limiting chamber to the first chamber during the pressure decrease in the pressure limiting chamber.

Optionally, the pressure limiting member may include five diaphragm plates connected in sequence, two adjacent diaphragm plates may be oscillated relative to each other, and two outermost diaphragm plates may be connected to the valve body, respectively, and a middle diaphragm plate may be configured to be connected to the inflation valve.

Optionally, the first chamber may be provided therein with a first stepped platform, and the first stepped platform may be configured to hermetically cooperate with the inshot valve, so as to close the first chamber;
the second chamber may be provided therein with a second stepped platform, and the second stepped platform may be configured to be hermetically fitted with the inflation valve, so as to close the second chamber.

Optionally, the inshot pressure limiting mechanism further may include an inshot spring and an inflation spring; two ends of the inshot spring may be connected to the valve body and the inshot valve, respectively, and two ends of the inflation spring may be connected to the inshot valve and the inflation valve, respectively.

Optionally, the inshot pressure limiting mechanism further may include a valve stem, and both the inshot valve and the inflation valve may be provided on the valve stem, and an end of the valve stem passing through the inflation valve may abut against the pressure limiting member.

Optionally, the valve body may be provided with a guide passage, and the guide passage may communicate the second chamber with the pressure limiting chamber; an end of the valve stem away from the inflation valve may be slidably provided in the guide passage, and a gap communicating the second chamber with the pressure limiting chamber may be formed between the valve stem and the guide passage.

Optionally, the inshot pressure limiting mechanism further may include a first pressure limiting seat and a first pressure limiting spring, wherein the first pressure limiting seat may be fixed to a side of the pressure limiting member away from the pressure limiting chamber, and two ends of the first pressure limiting spring may be connected to the first pressure limiting seat and the valve body, respectively; the first pressure limiting seat may be configured to, when being driven by the pressure limiting member to be located in a first preset position, enable the first chamber and the second chamber to be simultaneously in an open state; or the first pressure limiting seat may be configured to, when being driven by the pressure limiting member to be located in a second preset position, enable the first chamber to be in a closed state and the second chamber to be in an open state.

Optionally, the inshot pressure limiting mechanism further may include a second pressure limiting seat and a second pressure limiting spring, wherein the second pressure limiting seat may be provided between the first pressure limiting seat and the valve body, and two ends of the first pressure limiting spring may be connected to the second pressure limiting seat and the valve body, respectively; the second pressure limiting seat may be configured to, when being driven by the pressure limiting member to be moved together with the first pressure limiting seat to a third preset position, enable the first chamber and the second chamber to be simultaneously in a closed state.

Optionally, the second pressure limiting seat and the first pressure limiting seat may be arranged at intervals; the first pressure limiting seat may be configured to abut against the second pressure limiting seat under the driving of the pressure limiting member, so as to move to a third preset position in synchronization with the second pressure limiting seat.

Optionally, the inshot pressure limiting mechanism further may include a pressure limiting adjustment seat, the pressure limiting adjustment seat may be rotatably provided in the valve body, and the pressure limiting adjustment seat may be configured to adjust a distance between the pressure limiting adjustment seat and the pressure limiting member during rotation relative to the valve body; an end of the first pressure limiting spring away from the first pressure limiting seat may be connected to the pressure limiting adjustment seat, and an end of the second pressure limiting spring away from the second pressure limiting seat may be connected to the pressure limiting adjustment seat.

An embodiment of the present invention further provides an air brake system, wherein the air brake system may include the inshot pressure limiting mechanism.

Beneficial effects of the inshot pressure limiting mechanism and the air brake system in the embodiments of the present invention at least include, for example:
for the inshot pressure limiting mechanism, the air inlet may be configured for air intake, and the air outlet may be configured for air outlet. In the initial state, the first chamber and the second chamber may be simultaneously in an open state, the pressured air may simultaneously enter the first chamber and the second chamber through the air inlet, and then simultaneously enter the air outlet and the pressure limiting chamber from the second chamber, the first chamber and the second chamber may be simultaneously ventilated, and the air outlet may output the pressured air more quickly; as the pressure in the pressure limiting chamber is increased, the pressure limiting member may drive the inshot valve and the inflation valve to move until the first chamber is in the closed state and the second chamber is in the open state, and at this time, only the second chamber is ventilated, and the output speed of the pressured air at the air outlet may be controlled; the pressured air may continue to enter the pressure limiting chamber, and the first chamber and the second chamber are simultaneously in the closed state, then the pressure state of the air outlet may be maintained. By changing the pressure in the pressure limiting chamber, switching between three pressure limiting states may be realized, and the structure is simple.

The air brake system may include the above inshot pressure limiting mechanism, and can address the problems that the pressure limiting structure needs to adopt two valves in combination, and has a larger dimension.

### Brief Description of Drawings

In order to more clearly illustrate technical solutions of embodiments of the present invention, accompanying drawings which need to be used in the embodiments will be introduced briefly below, and it should be understood that the accompanying drawings below merely show some embodiments of the present invention, therefore, they should not be considered as limitation to the scope, and those ordinarily skilled in the art still could obtain other relevant accompanying drawings according to these accompanying drawings, without using any creative efforts.
FIG. 1 is a structural schematic diagram of an inshot pressure limiting mechanism in a first state provided in an embodiment of the present invention;
FIG. 2 is a structural schematic diagram of the inshot pressure limiting mechanism in a second state provided in an embodiment of the present invention; and
FIG. 3 is a structural schematic diagram of the inshot pressure limiting mechanism in a third state provided in an embodiment of the present invention.

Reference signs: 10-inshot pressure limiting mechanism; 100-valve body; 110-air inlet; 120-first chamber; 121-first stepped platform; 130-first passage; 140-second chamber; 141-second stepped platform; 150-second passage; 160-air outlet; 170-pressure limiting chamber; 200-inshot valve; 210-inflation valve; 220-inshot spring; 230-inflation spring; 240-valve stem; 250-pressure limiting member; 260-contraction plug; 300-first pressure limiting seat; 310-first pressure limiting spring; 320-second pressure limiting seat; 330-second pressure limiting spring; 340-pressure limiting adjustment seat.

### Detailed Description of Embodiments

In order to make objectives, technical solutions, and advantages of the embodiments of the present invention clearer, the technical solutions in the embodiments of the present invention will be described clearly and completely below in conjunction with accompanying drawings in the embodiments of the present invention, and apparently, the embodiments described are some but not all embodiments of the present invention Generally, components in the embodiments of the present invention as described and shown in the accompanying drawings herein, may be arranged and designed in various different configurations.

Therefore, the following detailed description of the embodiments of the present invention provided in the accompanying drawings is not intended to limit the scope of the present disclosure claimed, but merely illustrates chosen embodiments of the present invention. All of other embodiments obtained by those ordinarily skilled in the art based on the embodiments in the present invention without using creative efforts shall fall within the scope of protection of the present invention.

It should be noted that similar reference signs and letters represent similar items in the following accompanying drawings, therefore, once a certain item is defined in one accompanying drawing, it is not needed to be further defined or explained in subsequent accompanying drawings.

In the description of the present invention, it should be indicated that orientation or positional relationships indicated by terms such as "upper", "lower", "inner", and "outer", if appear, are based on orientation or positional relationships as shown in the drawings, or orientation or positional relationships of a product of the present invention when being conventionally placed in use, merely for facilitating describing the present invention and simplifying the description, rather than indicating or suggesting that related devices or elements have to be in the specific orientation or configured or operated in a specific orientation, Therefore, they should not be construed as limiting the present invention.

Besides, terms such as "first" and "second", if appear, are merely for distinctive description, but should not be construed as indicating or implying importance in the relativity.

It should be indicated that the features in the embodiments of the present disclosure may be combined with each other if there is no conflict.

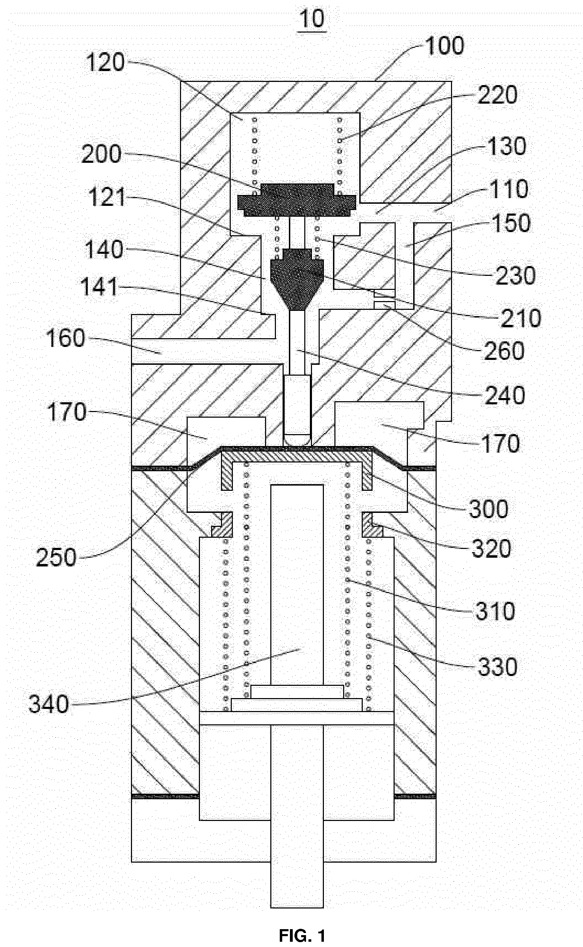

An inshot pressure limiting mechanism 10 provided in the present embodiment is described in detail below in combination with FIG. 1 to FIG. 3.

Referring to FIG. 1, an embodiment of the present invention provides an inshot pressure limiting mechanism 10, which includes a valve body 100, an inshot valve 200, an inflation valve 210, and a pressure limiting member 250; the valve body 100 may be provided with an air inlet 110, a first chamber 120, a second chamber 140, and an air outlet 160, and both the first chamber 120 and the second chamber 140 may be in communication with the air inlet 110, and the first chamber 120 may be in communication with the second chamber 140; the inshot valve 200 may be provided in the first chamber 120; the inflation valve 210 may be provided in the second chamber 140; the pressure limiting member 250 may be provided in the valve body 100, and a pressure limiting chamber 170 may be formed between the pressure limiting member 250 and the valve body 100, the pressure limiting chamber 170 may be in communication with the air outlet 160, and both the pressure limiting chamber 170 and the air outlet 160 may be in communication with the second chamber 140; the inshot valve 200 and the inflation valve 210 may be both connected to the pressure limiting member 250, and the pressure limiting member 250 may be configured to drive the inshot valve 200 and the inflation valve 210 to move during pressure change in the pressure limiting chamber 170, so that the first chamber 120 and the second chamber 140 are simultaneously in an open state; or the first chamber 120 is in a closed state, and the second chamber 140 is in an open state; or the first chamber 120 and the second chamber 140 are simultaneously in a closed state.

It should be noted that "connect" in "the inshot valve 200 and the inflation valve 210 are both connected to the pressure limiting member 250" may be a fixed connection or an abutment. That is, "drive" in "the pressure limiting member 250 is configured to drive the inshot valve 200 and the inflation valve 210 to move during pressure change in the pressure limiting chamber 170" refers to that "the inshot valve 200 and the inflation valve 210 also move during the process of movement of the pressure limiting member 250", including that the pressure limiting member 250 is fixed to the inshot valve 200 and the inflation valve 210, then the pressure limiting member 250, during movement, drives the inshot valve 200 and the inflation valve 210 to move due to the fixed relationship, or during the movement of the pressure limiting member 250, the inshot valve 200 and the inflation valve 210 move along with the pressure limiting member 250 due to gravity or pressure change or other reasons.

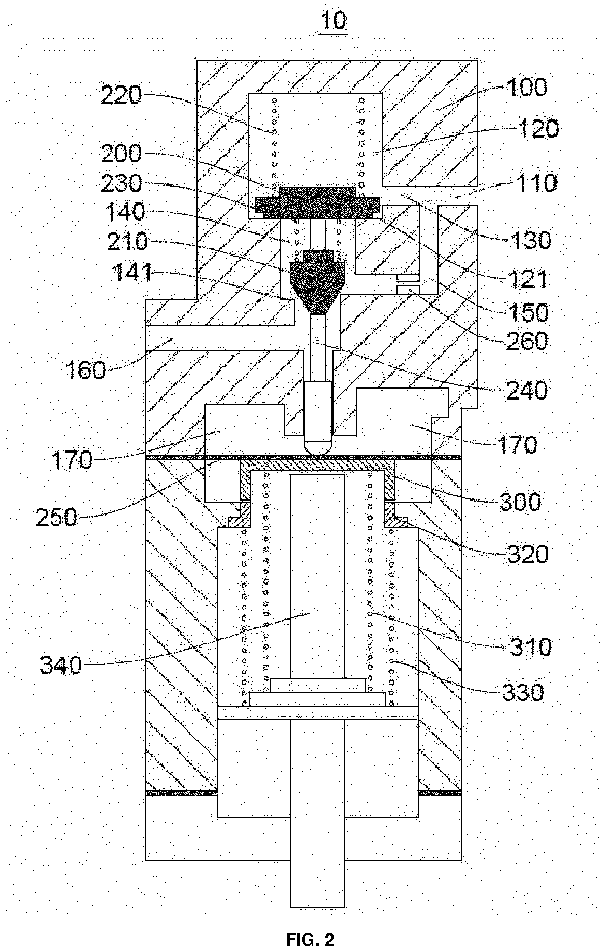

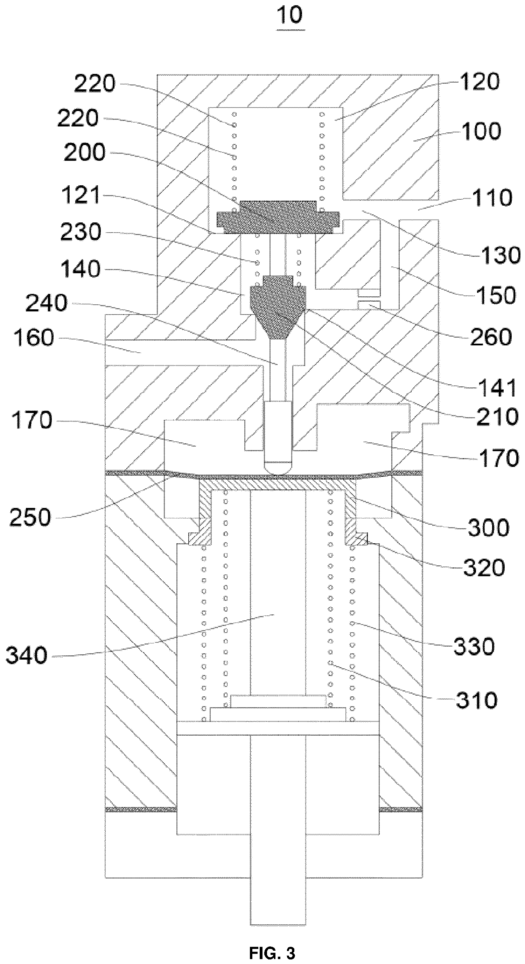

Referring to FIG. 1, the first chamber 120 may be in parallel connection with the second chamber 140. The pressure limiting chamber 170 may be in parallel connection with the air outlet 160. The pressure in the pressure limiting chamber 170 may reflect the pressure in the air outlet 160. In an initial state, the first chamber 120 and the second chamber 140 may be simultaneously in an open state, neither the inshot valve 200 nor the inflation valve 210 closes the first chamber 120 or the second chamber 140, the air inlet 110 may allow air intake, and the intake air may simultaneously enter the first chamber 120 and the second chamber 140, and then enter the air outlet 160 and the pressure limiting chamber 170 respectively from the second chamber 140; ventilating the first chamber 120 and the second chamber 140 together may enable an air transmission speed of the air outlet 160 to reach the highest. Referring to FIG. 2, air pressure in the pressure limiting chamber 170 continuously rises, and pushes the pressure limiting member 250 to drive the inshot valve 200 and the inflation valve 210 to move, until the inshot valve 200 closes the first chamber 120, the second chamber 140 is in an open state, the intake air through the air inlet 110 may enter the air outlet 160 and the pressure limiting chamber 170 through the second chamber 140, the first chamber 120 cannot continue to be ventilated, only the second chamber 140 is ventilated, and the air transmission speed of the air outlet 160 can be lowered and controlled. Referring to FIG. 3, air continuously enters the pressure limiting chamber 170, the pressure continuously rises, and pushes the pressure limiting member 250 to drive the inshot valve 200 and the inflation valve 210 to move, until the inshot valve 200 closes the first chamber 120, the inflation valve 210 closes the second chamber 140, air cannot continue to enter the air inlet 110, the pressure in the pressure limiting chamber 170 can be kept stable, and the pressure in the air outlet 160 is maintained. When the air outlet 160 leaks off, the pressure limiting chamber 170 also leaks off, and the pressure in the pressure limiting chamber 170 will drop, and again return to the state in which the second chamber 140 is opened and the first chamber 120 is closed.

To sum up, switching of the first chamber 120 and the second chamber 140 between opening and closing may be realized through the inshot valve 200, the inflation valve 210, and the pressure limiting member 250, thereby realizing the switching and regulation of three pressure limiting states of the air outlet 160. Compared with the prior art, the pressure limiting may be realized just with only one inshot pressure limiting mechanism 10, thus simplifying the structure.

Referring to FIG. 1, in the present embodiment, the inshot pressure limiting mechanism 10 further may include a contraction plug 260; the valve body 100 further may be provided with a first passage 130 and a second passage 150; the first passage 130 may communicate the air inlet 110 with the first chamber 120, the second passage 150 may communicate the air inlet 110 with the second chamber 140; and the contraction plug 260 may be provided in the second passage 150. The contraction plug 260 can adjust an air flow rate of the second passage 150, so that the conveying speed of the air outlet 160 may be controlled.

Referring to FIG. 1, in the present embodiment, the first chamber 120, the second chamber 140, and the pressure limiting chamber 170 may be provided in sequence; the inshot valve 200, the inflation valve 210, and the pressure limiting member 250 may be connected in sequence; the pressure limiting member 250 may be configured to drive the inshot valve 200 and the inflation valve 210 to move along a direction from the first chamber 120 to the pressure limiting chamber 170 during the pressure increase in the pressure limiting chamber 170, or the pressure limiting member 250 may be configured to drive the inshot valve 200 and the inflation valve 210 to move along a direction from the pressure limiting chamber 170 to the first chamber 120 during the pressure decrease in the pressure limiting chamber 170.

To introduce with reference to the relative position in FIG. 1, the first chamber 120, the second chamber 140, and the pressure limiting chamber 170 may be provided in sequence from top to bottom, the air inlet 110 may be provided at the right side of the first chamber 120, and the air outlet 160 may be provided at the left side of the second chamber 140. The inshot valve 200, the inflation valve 210, and the pressure limiting member 250 may be provided in sequence. A bottom end of the inflation valve 210 may abut against the pressure limiting member 250.

When the pressure in the pressure limiting chamber 170 is increased, the pressure limiting member 250 may move downward, and the inshot valve 200 and the inflation valve 210 may move downward with the pressure limiting member 250. During the downward movement, the inshot valve 200 first closes the first chamber 120, and then the inflation valve 210 closes the second chamber 140, so that the first chamber 120 is in a closed state, and the second chamber 140 is in an open state. As the pressure in the pressure limiting chamber 170 is increased, the pressure limiting member 250 may continue to move downward, the inshot valve 200 and the inflation valve 210 also may move downward with the pressure limiting member, until the inshot valve 200 closes the first chamber 120, and the inflation valve 210 closes the second chamber 140. When the air outlet 160 leaks off, the pressure in the pressure limiting chamber 170 may be decreased, the pressure limiting member 250 may move upward, the inflation valve 210 may move upward, the second chamber 140 may be opened, and the inshot valve 200 is still closed. When the pressure in the pressure limiting chamber 170 continues to be decreased, the pressure limiting member 250 may continuously move upward, until both the first chamber 120 and the second chamber 140 are opened, then fast air supply may be realized again.

Referring to FIG. 1, in the present embodiment, the pressure limiting member 250 may include five diaphragm plates connected in sequence, two adjacent diaphragm plates may be oscillated relative to each other, and two outermost diaphragm plates may be connected to the valve body 100, respectively, and a middle diaphragm plate may be configured to be connected to the inflation valve 210.

Referring to FIG. 1, the five diaphragm plates may be a first plate, a second plate, a third plate, a fourth plate, and a fifth plate, respectively. The first plate and the fifth plate may be embedded in the valve body 100. Referring to FIG. 1, in an initial state, the second plate, the third plate, and the fourth plate may be protruded upward so as to bear against the inshot valve 200 and the inflation valve 210. Referring to FIG. 2, the second plate, the third plate, and the fourth plate may be moved downward relative to the initial state, so that the inshot valve 200 and the inflation valve 210 may be moved downward. Referring to FIG. 3, the second plate, the third plate, and the fourth plate may be protruded downward to allow the inshot valve 200 and the inflation valve 210 to continue to move downward.

Referring to FIG. 1, in the present embodiment, the first chamber 120 may be provided therein with a first stepped platform 121, and the first stepped platform 121 may be configured to hermetically cooperate with the inshot valve 200, so as to close the first chamber 120; the second chamber 140 may be provided therein with a second stepped platform 141, and the second stepped platform 141 may be configured to be hermetically fitted with the inflation valve 210, so as to close the second chamber 140.

When the inshot valve 200 is hermetically fitted with the first stepped platform 121, the first chamber 120 and the second chamber 140 may be separated, and the intake air through the air inlet 110 can only pass through the second chamber 140 to enter the air outlet 160 and the pressure limiting chamber 170. When the inflation valve 210 is hermetically fitted with the second stepped platform 141, the second chamber 140 is closed, and the intake air cannot be ventilated through the second chamber 140. Specifically, the inflation valve 210 may be in a conical shape, and a conical surface of the inflation valve 210 may hermetically abut against the second stepped platform 141.

Referring to FIG. 1, in the present embodiment, the inshot pressure limiting mechanism 10 further may include an inshot spring 220 and an inflation spring 230; two ends of the inshot spring 220 may be connected to the valve body 100 and the inshot valve 200, respectively, and two ends of the inflation spring 230 may be connected to the inshot valve 200 and the inflation valve 210, respectively.

Specifically, the inshot pressure limiting mechanism 10 further may include a valve stem 240, and both the inshot valve 200 and the inflation valve 210 may be provided on the valve stem 240, and the end of the valve stem 240 passing through the inflation valve 210 may abut against the pressure limiting member 250.

Specifically, the valve body 100 may be provided with a guide passage, and the guide passage may communicate the second chamber 140 with the pressure limiting chamber 170; an end of the valve stem 240 away from the inflation valve 210 may be slidably provided in the guide passage, and a gap communicating the second chamber 140 with the pressure limiting chamber 170 may be formed between the valve stem 240 and the guide passage. The valve stem 240 may cooperate with the guide passage for guiding the movement of the inshot valve 200 and the inflation valve 210.

Referring to FIG. 1, in the present embodiment, the inshot pressure limiting mechanism 10 further may include a first pressure limiting seat 300 and a first pressure limiting spring 310; the first pressure limiting seat 300 may be fixed to one side of the pressure limiting member 250 away from the pressure limiting chamber 170, and two ends of the first pressure limiting spring 310 may be connected to the first pressure limiting seat 300 and the valve body 100, respectively; the first pressure limiting seat 300 may be configured to, when being driven by the pressure limiting member 250 to be located in a first preset position, enable the first chamber 120 and the second chamber 140 to be simultaneously in an open state; or the first pressure limiting seat 300 may be configured to, when being driven by the pressure limiting member 250 to be located in a second preset position, enable the first chamber 120 to be in a closed state and the second chamber 140 to be in an open state.

Referring to FIG. 1, during the process that the pressure in the pressure limiting chamber 170 is gradually increased, the first pressure limiting seat 300 may be located in the first preset position, and at this time, neither the inshot valve 200 nor the inflation valve 210 is closed, and the first chamber 120 and the second chamber 140 are simultaneously in an open state. Referring to FIG. 2, the first pressure limiting seat 300 may compress the first pressure limiting spring 310 to move downward to the second preset position, the first chamber 120 is closed, and the second chamber 140 is opened. The first pressure limiting spring 310 may be configured to control a pressure maximum upper limit value of the pressure limiting chamber 170 in the state that the first chamber 120 is closed and the second chamber 140 is opened.

Referring to FIG. 1, in the present embodiment, the inshot pressure limiting mechanism 10 further may include a second pressure limiting seat 320 and a second pressure limiting spring 330; the second pressure limiting seat 320 may be provided between the first pressure limiting seat 300 and the valve body 100, and two ends of the second pressure limiting spring 330 may be connected to the second pressure limiting seat 320 and the valve body 100, respectively; the second pressure limiting seat 320 may be configured to, when being driven by the pressure limiting member 250 to be moved together with the first pressure limiting seat 300 to a third preset position, enable the first chamber 120 and the second chamber 140 to be simultaneously in a closed state.

Referring to FIG. 3, the pressure in the pressure limiting chamber 170 is continuously increased, and the pressure limiting member 250 may move downward, thereby pushing the first pressure limiting seat 300 to move downward until the pressure limiting member 250 pushes the first pressure limiting seat 300 and the second pressure limiting seat 320 to compress the first pressure limiting spring 310 and the second pressure limiting spring 330 to move downward together to a third preset position, and at this time, the first chamber 120 and the second chamber 140 are simultaneously in a closed state. The first pressure limiting spring 310 and the second pressure limiting spring 330 may be configured to jointly control the pressure maximum upper limit value of the pressure limiting chamber 170 when the first chamber 120 and the second chamber 140 are simultaneously closed.

Referring to FIG. 3, in the present embodiment, the second pressure limiting seat 320 and the first pressure limiting seat 300 may be arranged at intervals; the first pressure limiting seat 300 may be configured to abut against the second pressure limiting seat 320 under the driving of the pressure limiting member 250, so as to move to the third preset position in synchronization with the second pressure limiting seat 320.

Referring to FIG. 3, in the process that the pressure in the pressure limiting chamber 170 is increased, the pressure limiting member 250 may move downward, thereby pushing the first pressure limiting seat 300 to move downward until the first pressure limiting seat 300 abuts against the second pressure limiting seat 320, the pressure limiting member 250 pushes the first pressure limiting seat 300 to move downward in synchronization with the second pressure limiting seat 320 until moving to the third preset position, then the first chamber 120 and the second chamber 140 are closed.

When the air outlet 160 leaks off, the pressure in the pressure limiting chamber 170 may be decreased, the first pressure limiting seat 300 moves upward under the effect of the first pressure limiting spring 310, and the second pressure limiting seat 320 moves upward under the effect of the second pressure limiting spring 330, and then it again returns to the state that the first chamber 120 is closed, and the second chamber 140 is opened.

Referring to FIG. 3, in the present embodiment, the inshot pressure limiting mechanism 10 further may include a pressure limiting adjustment seat 340, wherein the pressure limiting adjustment seat 340 may be rotatably provided in the valve body 100, and the pressure limiting adjustment seat 340 may be configured to adjust the distance between the pressure limiting adjustment seat 340 and the pressure limiting member 250 during rotation relative to the valve body 100; the end of the first pressure limiting spring 310 away from the first pressure limiting seat 300 may be connected to the pressure limiting adjustment seat 340, and the end of the second pressure limiting spring 330 away from the second pressure limiting seat 320 may be connected to the pressure limiting adjustment seat 340.

To introduce with reference to the relative position in FIG. 3, the pressure limiting adjustment seat 340 is rotated, and the pressure limiting adjustment seat 340 may be reciprocated along a vertical direction. During the upward movement of the pressure limiting adjustment seat 340, the pressure limiting adjustment seat 340 is close to the pressure limiting member 250, the distance between the pressure limiting adjustment seat 340 and the pressure limiting member 250 is decreased, and at this time, a restoring force of the first pressure limiting spring 310 and the second pressure limiting spring 330 becomes larger, thereby increasing an upper limit pressure value of the pressure limiting chamber 170. During the downward movement of the pressure limiting adjustment seat 340, the pressure limiting adjustment seat 340 is away from the pressure limiting member 250, the distance between the pressure limiting adjustment seat 340 and the pressure limiting member 250 is increased, and at this time, the restoring force of the first pressure limiting spring 310 and the second pressure limiting spring 330 becomes smaller, thereby decreasing the upper limit pressure value of the pressure limiting chamber 170.

According to the inshot pressure limiting mechanism 10 provided in the present embodiment, taking the air inlet 110 being charged with Cv (precontrolled) pressured air as an example for illustration, the inshot pressure limiting mechanism 10 may include the following operation principle.

Referring to FIG. 1, FIG. 1 shows an inshot position state. When the air inlet 110 is free of Cv pressured air, the inshot valve 200 and the inflation valve 210 may be in an open state under the effect of the first pressure limiting spring 310.

When the brake system generates a braking effect, one path of the Cv pressured air may quickly flow into upper and lower chambers of the inshot valve 200 through the first passage, and flow towards the pressure limiting chamber 170 and the air outlet 160 through the gap between the inflation valve 210 and the valve body 100; and the other path may flow towards the gap between the inflation valve 210 and the valve body 100 through the second passage and the contraction plug 260, and enter the air outlet 160 and the pressure limiting chamber 170.

Referring to FIG. 2, FIG. 2 shows an inshot closed position state. The Cv pressured air may enter the pressure limiting chamber 170. As the pressure gradually increases, the force acting on an upper surface of the first pressure limiting seat 300 gradually increases. When the acting force is greater than the spring force of the first pressure limiting spring 310, the pressure limiting member 250 and the first pressure limiting seat 300 will move downward and compress the first pressure limiting spring 310. As the pressure limiting member 250 and the first pressure limiting seat 300 move downward against the spring force, the inflation valve 210 and the inshot valve 200 move downward under the effect of the inshot spring 220 and the inflation spring 230, until the inshot valve 200 is closely fitted with the first stepped platform 121 of the valve body 100, at this time, the Cv pressured air can only enter the air outlet 160 and the pressure limiting chamber 170 through the second passage and the contraction plug 260. The inshot output of the Cv pressured air is finished.

Referring to FIG. 3, FIG. 3 shows a pressure limiting position state. As the pressure in the pressure limiting chamber 170 gradually rises, the pressure limiting member 250 and the first pressure limiting seat 300 compress the first pressure limiting spring 310 to move, and when contacting the second pressure limiting seat 320, the first pressure limiting seat 300 will compress the first pressure limiting spring 310 and the second pressure limiting spring 330 to move. Then the inflation valve 210 will get close to the second stepped platform 141 under the effect of the inflation spring 230, and when the inflation valve 210 is closely fitted with the valve body 100, the pressure in the air outlet 160 and the pressure limiting chamber 170 stops rising, thus completing the pressure limitation to the air outlet 160.

When the pressure in the air outlet 160 leaks off, the air pressure in the pressure limiting chamber 170 will drop, and when the balance is broken, the pressure limiting member 250 will push the inflation valve 210 to be separated from the second stepped platform 141, an inflation passage is opened, and the inshot valve 200 is still closed. At this time, the pressure in the pressure limiting chamber 170 and the air outlet 160 will rise, and reach the pressure limiting position again.

The inshot pressure limiting mechanism 10 provided in the present embodiment at least has the following advantages.

In the initial state, the air inlet 110 is free of pressure, the first chamber 120 and the second chamber 140 may be simultaneously in the open state, the first chamber 120 and the second chamber 140 may be simultaneously ventilated, and the air outlet 160 may output the pressured air more quickly; as the pressure in the pressure limiting chamber 170 is increased, the pressure limiting member 250 may drive the inshot valve 200 and the inflation valve 210 to move until the first chamber 120 is in the closed state and the second chamber 140 is in the open state, and at this time, only the second chamber 140 is ventilated, and the output speed of the pressured air at the air outlet 160 may be controlled; the pressured air may continue to enter the pressure limiting chamber 170, and the first chamber 120 and the second chamber 140 are simultaneously in the closed state, then the pressure state of the air outlet 160 may be maintained. By changing the pressure in the pressure limiting chamber 170, switching between three pressure limiting states may be realized, and the structure is simple.

An embodiment of the present invention further provides an air brake system. The air brake system may include an inshot pressure limiting mechanism 10. The air brake system further may include a control air cylinder, an auxiliary reservoir, and so on.

The air brake system including the inshot pressure limiting mechanism 10 described above controls actions in an initial stage, a middle stage, a pressure holding stage, etc. of the braking, respectively. During the initial stage of braking of the brake system, the first chamber 120 and the second chamber 140 are simultaneously in an open state, and pressured air may be output quickly, so that a rear end actuating mechanism of the brake system acts quickly, ensuring the braking consistency of vehicles in the whole train. During the middle stage of braking of the brake system, the first chamber 120 is in a closed state, and the second chamber 140 is in an open state, and the brake inflation speed may be controlled, ensuring the braking stability of vehicles in the whole train. During the pressure holding stage of the braking, the first chamber 120 and the second chamber 140 are simultaneously in the closed state, and the highest pressure output by the brake system may be controlled, and a current brake pressure of the vehicle may be maintained.

The above-mentioned are merely specific embodiments of the present invention, but the scope of protection of the present invention is not limited thereto, and any change or substitution that may be easily envisaged by those skilled in the present art within the technical scope disclosed in the present invention should fall within the scope of protection of the present invention Therefore, the scope of protection of the present invention is defined in the claims.

### Industrial Applicability

The present invention concerns an inshot pressure limiting mechanism and the air brake system. The inshot pressure limiting mechanism includes the valve body, the inshot valve, the inflation valve, and the pressure limiting member; the valve body is provided with the air inlet, the first chamber, the second chamber, and the air outlet; the inshot valve is provided in the first chamber; the inflation valve is provided in the second chamber; the inshot valve and the inflation valve are both connected to the pressure limiting member, and the pressure limiting member is configured to drive the inshot valve and the inflation valve to move during pressure change in the pressure limiting chamber. The air brake system includes the inshot pressure limiting mechanism. When the first chamber and the second chamber are simultaneously opened, and the air outlet may output the pressured air more quickly; when the first chamber is closed, and the second chamber is opened, the output speed of the air outlet may be controlled; when the first chamber and the second chamber are simultaneously closed, the current pressure state of the air outlet may be maintained, thus realizing the switching between three pressure limiting states.

Besides, it may be understood that the inshot pressure limiting mechanism and the air brake system in the present disclosure may be reproduced, and may be applied in a variety of industrial applications. For example, the inshot pressure limiting mechanism in the present invention may be applied to any air brake system.

## Claims

1. An inshot pressure limiting mechanism (10), comprising:
a valve body (100), an inshot valve (200), an inflation valve (210), and a pressure limiting member (250), wherein
the valve body (100) is provided with an air inlet (110), a first chamber (120), a second chamber (140), and an air outlet (160), and both the first chamber (120) and the second chamber (140) are in communication with the air inlet (110), and the first chamber (120) is in communication with the second chamber (140);
the inshot valve (200) is provided in the first chamber (120); the inflation valve (210) is provided in the second chamber (140); the pressure limiting member (250) is provided in the valve body (100), and a pressure limiting chamber (170) is formed between the pressure limiting member (250) and the valve body (100), the pressure limiting chamber (170) is in communication with the air outlet (160), and both the pressure limiting chamber (170) and the air outlet (160) are in communication with the second chamber (140); and
the inshot valve (200) and the inflation valve (210) are both connected to the pressure limiting member (250), and the pressure limiting member (250) is configured to drive the inshot valve (200) and the inflation valve (210) to move during pressure change in the pressure limiting chamber (170), so that the first chamber (120) and the second chamber (140) are simultaneously in an open state; or the first chamber (120) is in a closed state, and the second chamber (140) is in an open state; or the first chamber (120) and the second chamber (140) are simultaneously in a closed state;
**characterized in that**:
the inshot pressure limiting mechanism (10) further comprises a contraction plug (260); and
the valve body (100) is further provided with a first passage (130) and a second passage (150); the first passage (130) makes the air inlet (110) communicate with the first chamber (120), the second passage (150) makes the air inlet (110) communicate with the second chamber (140); and the contraction plug (260) is provided in the second passage (150).

2. The inshot pressure limiting mechanism (10) according to claim 1, wherein the first chamber (120), the second chamber (140), and the pressure limiting chamber (170) are provided in sequence; the inshot valve (200), the inflation valve (210), and the pressure limiting member (250) are connected in sequence; and the pressure limiting member (250) is configured to drive the inshot valve (200) and the inflation valve (210) to move along a direction from the first chamber (120) to the pressure limiting chamber (170) during pressure increase in the pressure limiting chamber (170), or the pressure limiting member (250) is configured to drive the inshot valve (200) and the inflation valve (210) to move along a direction from the pressure limiting chamber (170) to the first chamber (120) during pressure decrease in the pressure limiting chamber (170).

3. The inshot pressure limiting mechanism (10) according to any one of claims 1 to 2,
wherein the pressure limiting member (250) comprises five diaphragm plates connected in sequence, two adjacent diaphragm plates are oscillated relative to each other, and two outermost diaphragm plates are connected to the valve body (100), respectively, and a middle diaphragm plate is configured to be connected to the inflation valve (210).

4. The inshot pressure limiting mechanism (10) according to any one of claims 1 to 3, wherein
the first chamber (120) is provided therein with a first stepped platform (121), and the first stepped platform (121) is configured to hermetically cooperate with the inshot valve (200), so as to close the first chamber (120); and
the second chamber (140) is provided therein with a second stepped platform (141), and the second stepped platform (141) is configured to be hermetically fitted with the inflation valve (210), so as to close the second chamber (140).

5. The inshot pressure limiting mechanism (10) according to any one of claims 1 to 4,
wherein the inshot pressure limiting mechanism (10) further comprises an inshot spring (220) and an inflation spring (230), wherein two ends of the inshot spring (220) are connected to the valve body (100) and the inshot valve (200), respectively, and two ends of the inflation spring (230) is connected to the inshot valve (200) and the inflation valve (210), respectively.

6. The inshot pressure limiting mechanism (10) according to any one of claims 1 to 5,
wherein the inshot pressure limiting mechanism (10) further comprises a valve stem (240), and both the inshot valve (200) and the inflation valve (210) are provided on the valve stem (240), and an end of the valve stem (240) passing through the inflation valve (210) abuts against the pressure limiting member (250).

7. The inshot pressure limiting mechanism (10) according to claim 6,
wherein the valve body (100) is provided with a guide passage, and the guide passage communicates the second chamber (140) with the pressure limiting chamber (170); an end of the valve stem (240) away from the inflation valve (210) is slidably provided in the guide passage, and a gap communicating the second chamber (140) with the pressure limiting chamber (170) is formed between the valve stem (240) and the guide passage.

8. The inshot pressure limiting mechanism (10) according to any one of claims 1 to 7,
wherein the inshot pressure limiting mechanism (10) further comprises a first pressure limiting seat (300) and a first pressure limiting spring (310), wherein the first pressure limiting seat (300) is fixed to a side of the pressure limiting member (250) away from the pressure limiting chamber (170), and two ends of the first pressure limiting spring (310) are connected to the first pressure limiting seat (300) and the valve body (100), respectively; the first pressure limiting seat (300) is configured to, when being driven by the pressure limiting member (250) to be located in a first preset position, enable the first chamber (120) and the second chamber (140) to be simultaneously in an open state; or the first pressure limiting seat (300) is configured to, when being driven by the pressure limiting member (250) to be located in a second preset position, enable the first chamber (120) to be in a closed state and the second chamber (140) to be in an open state.

9. The inshot pressure limiting mechanism (10) according to claim 8,
wherein the inshot pressure limiting mechanism (10) further comprises a second pressure limiting seat (320) and a second pressure limiting spring (330), wherein the second pressure limiting seat (320) is provided between the first pressure limiting seat (300) and the valve body (100), and two ends of the second pressure limiting spring (330) are connected to the second pressure limiting seat (320) and the valve body (100), respectively; the second pressure limiting seat (320) is configured to, when being driven by the pressure limiting member (250) to be moved together with the first pressure limiting seat (300) to a third preset position, enable the first chamber (120) and the second chamber (140) to be simultaneously in a closed state.

10. The inshot pressure limiting mechanism (10) according to claim 9,
wherein the second pressure limiting seat (320) and the first pressure limiting seat (300) are arranged at intervals; the first pressure limiting seat (300) is configured to abut against the second pressure limiting seat (320) under driving of the pressure limiting member (250), so as to move to the third preset position in synchronization with the second pressure limiting seat (320).

11. The inshot pressure limiting mechanism (10) according to claim 9 or 10,
wherein the inshot pressure limiting mechanism (10) further comprises a pressure limiting adjustment seat (340), the pressure limiting adjustment seat (340) is rotatably provided in the valve body (100), and the pressure limiting adjustment seat (340) is configured to adjust a distance between the pressure limiting adjustment seat (340) and the pressure limiting member (250) during rotating relative to the valve body (100); an end of the first pressure limiting spring (310) away from the first pressure limiting seat (300) is connected to the pressure limiting adjustment seat (340), and an end of the second pressure limiting spring (330) away from the second pressure limiting seat (320) is connected to the pressure limiting adjustment seat (340).

12. An air brake system, **characterized in that**
the air brake system comprises the inshot pressure limiting mechanism (10) according to any one of claims 1 to 11.

## Patentansprüche

1. Einschaltdruckbegrenzungsmechanismus (10), enthaltend:
einen Ventilkörper (100), ein Einschaltventil (200), ein Füllventil (210) und ein Druckbegrenzungselement (250), wobei
der Ventilkörper (100) mit einem Lufteinlass (110), einer ersten Kammer (120), einer zweiten Kammer (140) und einem Luftauslass (160) versehen ist, und sowohl die erste Kammer (120) als auch die zweite Kammer (140) in Verbindung mit dem Lufteinlass (110) sind, und die erste Kammer (120) in Verbindung mit der zweiten Kammer (140) ist;
das Einschaltventil (200) in der ersten Kammer (120) vorgesehen ist; das Füllventil (210) in der zweiten Kammer (140) vorgesehen ist; das Druckbegrenzungselement (250) in dem Ventilkörper (100) vorgesehen ist, und eine Druckbegrenzungskammer (170) zwischen dem Druckbegrenzungselement (250) und dem Ventilkörper (100) geformt ist, wobei die Druckbegrenzungskammer (170) in Verbindung mit dem Luftauslass (160) ist, und sowohl die Druckbegrenzungskammer (170) also auch der Luftauslass (160) in Verbindung mit der zweiten Kammer (140) sind; und
das Einschaltventil (200) und das Füllventil (210) beide mit dem Druckbegrenzungselement (250) verbunden sind, und das Druckbegrenzungselement (250) konfiguriert ist, das Einschaltventil (200) und das Füllventil (210) zur Bewegung während einer Druckänderung in der Druckbegrenzungskammer (170) anzutreiben, so dass die erste Kammer (120) und die zweite Kammer (140) gleichzeitig in einem offenen Zustand sind; oder dass die erste Kammer (120) in einem geschlossenen Zustand ist und die zweite Kammer (140) in einem offenen Zustand ist; oder dass die erste Kammer (120) und die zweite Kammer (140) gleichzeitig in einem geschlossenen Zustand sind;
**dadurch gekennzeichnet, dass**
der Einschaltdruckbegrenzungsmechanismus (10) weiter einen Kontraktionsstopfen (260) enthält; und
der Ventilkörper (100) weiter mit einem ersten Durchlass (130) und einem zweiten Durchlass (150) versehene ist; wobei der erste Durchlass (130) dem Lufteinlass (110) eine Kommunikation mit der ersten Kammer (120) ermöglicht, der zweite Durchlass (150) dem Lufteinlass (110) eine Kommunikation mit der zweiten Kammer (140) ermöglicht; und der Kontraktionsstopfen (260) in dem zweiten Durchlass (150) vorgesehen ist.

2. Einschaltdruckbegrenzungsmechanismus (10) nach Anspruch 1, wobei
die erste Kammer (120), die zweite Kammer (140) und die Druckbegrenzungskammer (170) in Reihe vorgesehen sind; das Einschaltventil (200), das Füllventil (210) und das Druckbegrenzungselement (250) in Reihe verbunden sind; und
das Druckbegrenzungselement (250) konfiguriert ist, das Einschaltventil (200) und das Füllventil (210) zur Bewegung entlang einer Richtung von der ersten Kammer (120) zu der Druckbegrenzungskammer (170) während eines Druckanstiegs in der Druckbegrenzungskammer (170) anzutreiben, oder das Druckbegrenzungselement (250) konfiguriert ist, das Einschaltventil (200) und das Füllventil (210) zur Bewegung entlang einer Richtung von der Druckbegrenzungskammer (170) zu der ersten Kammer (120) während eines Druckabfalls in der Druckbegrenzungskammer (170) anzutreiben,

3. Einschaltdruckbegrenzungsmechanismus (10) nach einem der Ansprüche 1 oder 2,
wobei das Druckbegrenzungselement (250) fünf Membranplatten, die in Reihe verbunden sind, enthält, zwei zueinander benachbarte Membranplatten relativ zueinander oszilliert werden, und die zwei äußersten Membranplatten mit dem Ventilkörper (100) jeweils verbunden sind, und eine mittlere Membranplatte konfiguriert ist, mit dem Füllventil (210) verbunden zu sein.

4. Einschaltdruckbegrenzungsmechanismus (10) nach einem der Ansprüche 1 bis 3, wobei
die erste Kammer (120) mit einer ersten gestuften Plattform (121) in ihr versehen ist, und die erste gestufte Plattform (121) konfiguriert ist, dass sie hermetisch mit dem Einschaltventil (200) zum Schließen der ersten Kammer (120) zusammenwirkt; und
die zweite Kammer (140) mit einer zweiten gestuften Plattform (141) in ihr versehen ist, und die zweite gestufte Plattform (141) konfiguriert ist, dass sie hermetisch in das Füllventil (210) passt, so dass sie die zweite Kammer (140) schließt.

5. Einschaltdruckbegrenzungsmechanismus (10) nach einem der Ansprüche 1 bis 4,
wobei der Einschaltdruckbegrenzungsmechanismus (10) weiter eine Einschaltfeder (220) und eine Füllfeder (230) enthält, wobei zwei Enden der Einschaltfeder (220) mit dem Ventilkörper (100) bzw. dem Einschaltventil (200) verbunden sind, und zwei Enden der Füllfeder (230) mit dem mit dem Einschaltventil (200) bzw. dem Füllventil (210) verbunden sind.

6. Einschaltdruckbegrenzungsmechanismus (10) nach einem der Ansprüche 1 bis 5,
wobei der Einschaltdruckbegrenzungsmechanismus (10) weiter einen Ventilschaft (240) enthält, und sowohl das Einschaltventil (200) als auch das Füllventil (210) auf dem Ventilschaft (240) vorgesehen sind, und ein Ende des Ventilschafts (240), das durch das Füllventil (210) läuft, gegen das Druckbegrenzungselement (250) stößt.

7. Einschaltdruckbegrenzungsmechanismus (10) nach Anspruch 6,
wobei der Ventilkörper (100) mit einem Führungsdurchlass versehen ist, und der Führungsdurchlass die zweite Kammer (140) mit der Druckbegrenzungskammer (170) verbindet; ein Ende des Ventilschafts (240), das entfernt von dem Füllventil (210) ist, verschiebbar in dem Führungsdurchlass vorgesehen ist, und ein Spalt, der die zweite Kammer (140) mit der Druckbegrenzungskammer (170) verbindet, zwischen dem Ventilschaft (240) und dem Führungsdurchlass geformt ist.

8. Einschaltdruckbegrenzungsmechanismus (10) nach einem der Ansprüche 1 bis 7,
wobei der Einschaltdruckbegrenzungsmechanismus (10) weiter einen ersten Druckbegrenzungssitz (300) und eine erste Druckbegrenzungsfeder (310) enthält, wobei der erste Druckbegrenzungssitz (300) an einer Seite des Druckbegrenzungselements (250) entfernt von der Druckbegrenzungskammer (170) befestigt ist, und zwei Enden der ersten Druckbegrenzungsfeder (310) mit dem ersten Druckbegrenzungssitz (300) bzw. dem Ventilkörper (100) verbunden sind; der erste Druckbegrenzungssitz (300) konfiguriert ist, wenn er durch das Druckbegrenzungselement (250) angetrieben ist, dass er in einer ersten vorgegebenen Position ist, dass er ermöglicht, dass die erste Kammer (120) und die zweite Kammer (140) gleichzeitig in einem offenen Zustand sind; oder der erste Druckbegrenzungssitz (300) konfiguriert ist, wenn er durch das Druckbegrenzungselement (250) angetrieben ist, dass er in einer zweiten vorgegebenen Position ist, dass er ermöglicht, dass die erste Kammer (120) in einem geschlossenen Zustand ist und die zweite Kammer (140) in einem offenen Zustand ist.

9. Einschaltdruckbegrenzungsmechanismus (10) nach Anspruch 8,
wobei der Einschaltdruckbegrenzungsmechanismus (10) weiter einen zweiten Druckbegrenzungssitz (320) und eine zweite Druckbegrenzungsfeder (330) enthält, wobei der zweite Druckbegrenzungssitz (320) zwischen dem ersten Druckbegrenzungssitz (300) und dem Ventilkörper (100) vorgesehen ist, und zwei Enden der zweiten Druckbegrenzungsfeder (330) mit dem zweiten Druckbegrenzungssitz (320) bzw. dem Ventilkörper (100) verbunden sind; der zweite Druckbegrenzungssitz (320) konfiguriert ist, wenn er durch das Druckbegrenzungselement (250) angetrieben ist, dass er, wenn er zusammen mit dem ersten Druckbegrenzungssitz (300) in eine dritte vorgegebene Position bewegt ist, ermöglicht, dass die erste Kammer (120) und die zweite Kammer (140) gleichzeitig in einem geschlossenen Zustand sind.

10. Einschaltdruckbegrenzungsmechanismus (10) nach Anspruch 9,
wobei der zweite Druckbegrenzungssitz (320) und der erste Druckbegrenzungssitz (300) unter Intervallen angeordnet sind; der erste Druckbegrenzungssitz (300) konfiguriert ist, dass er gegen den zweiten Druckbegrenzungssitz (320) unter dem Antrieb des Druckbegrenzungselements (250) stößt, so dass er sich in die dritte vorgegebene Position synchron mit dem zweiten Druckbegrenzungssitz (320) bewegt.

11. Einschaltdruckbegrenzungsmechanismus (10) nach Anspruch 9 oder 10,
wobei der Einschaltdruckbegrenzungsmechanismus (10) weiter einen Druckbegrenzungsjustiersitz (340) enthält, der Druckbegrenzungsjustiersitz (340) drehbar in dem Ventilkörper (100) vorgesehen ist, und der Druckbegrenzungsjustiersitz (340) konfiguriert ist, einen Abstand zwischen dem Druckbegrenzungsjustiersitz (340) und dem Druckbegrenzungselement (250) bei deiner Rotation relativ zu dem Ventilkörper (100) einzustellen; ein Ende der ersten Druckbegrenzungsfeder (310) entfernt von dem ersten Druckbegrenzungssitz (300) mit dem Druckbegrenzungsjustiersitz (340) verbunden ist, und ein Ende der zweiten Druckbegrenzungsfeder (330) entfernt von dem zweiten Druckbegrenzungssitz (320) mit dem Druckbegrenzungsjustiersitz (340) verbunden ist.

12. Luftbremssystem, **dadurch gekennzeichnet, dass**
das Luftbremssystem den Einschaltdruckbegrenzungsmechanismus (10) nach einem der Ansprüche 1 bis 11 enthält.

## Revendications

1. Mécanisme de limitation de pression de premier temps (10), comprenant :
un corps de soupapes (100), une soupape de premier temps (200), une soupape de gonflage (210) et un élément de limitation de pression (250), dans lequel
le corps de soupapes (100) est doté d'une entrée d'air (110), d'une première chambre (120), d'une seconde chambre (140) et d'une sortie d'air (160), et la première chambre (120) et la seconde chambre (140) sont toutes deux en communication avec l'entrée d'air (110), et la première chambre (120) est en communication avec la seconde chambre (140) ;
la soupape de premier temps (200) est fournie dans la première chambre (120) ; la soupape de gonflage (210) est fournie dans la seconde chambre (140) ; l'élément de limitation de pression (250) est fourni dans le corps de soupapes (100), et une chambre de limitation de pression (170) est formée entre l'élément de limitation de pression (250) et le corps de soupapes (100), la chambre de limitation de pression (170) est en communication avec la sortie d'air (160), et la chambre de limitation de pression (170) et la sortie d'air (160) sont toutes deux en communication avec la seconde chambre (140) ; et
la soupape de premier temps (200) et la soupape de gonflage (210) sont toutes deux reliées à l'élément de limitation de pression (250), et l'élément de limitation de pression (250) est configuré pour entraîner la soupape de premier temps (200) et la soupape de gonflage (210) pour qu'elles se déplacent durant un changement de pression dans la chambre de limitation de pression (170), de sorte que la première chambre (120) et la seconde chambre (140) soient simultanément dans un état ouvert ; ou la première chambre (120) est dans un état fermé, et la seconde chambre (140) est dans un état ouvert ; ou la première chambre (120) et la seconde chambre (140) sont simultanément dans un état fermé ;
**caractérisé en ce que** :
le mécanisme de limitation de pression de premier temps (10) comprend en outre un bouchon à contraction (260) ; et
le corps de soupapes (100) est en outre doté d'un premier passage (130) et d'un second passage (150) ; le premier passage (130) met l'entrée d'air (110) en communication avec la première chambre (120), le second passage (150) met l'entrée d'air (110) en communication avec la seconde chambre (140) ; et le bouchon à contraction (260) est fourni dans le second passage (150).

2. Mécanisme de limitation de pression de premier temps (10) selon la revendication 1, dans lequel
la première chambre (120), la seconde chambre (140) et la chambre de limitation de pression (170) sont fournies les unes après les autres ; la soupape de premier temps (200), la soupape de gonflage (210) et l'élément de limitation de pression (250) sont reliés les uns après les autres ; et
l'élément de limitation de pression (250) est configuré pour entraîner la soupape de premier temps (200) et la soupape de gonflage (210) pour qu'elles se déplacent le long d'une direction depuis la première chambre (120) jusqu'à la chambre de limitation de pression (170) durant une augmentation de pression dans la chambre de limitation de pression (170), ou l'élément de limitation de pression (250) est configuré pour entraîner la soupape de premier temps (200) et la soupape de gonflage (210) pour qu'elles se déplacent le long d'une direction depuis la chambre de limitation de pression (170) jusqu'à la première chambre (120) durant une diminution de pression dans la chambre de limitation de pression (170),

3. Mécanisme de limitation de pression de premier temps (10) selon l'une quelconque des revendications 1 à 2,
dans lequel l'élément de limitation de pression (250) comprend cinq déflecteurs reliés les uns après les autres, deux déflecteurs adjacents oscillent l'un par rapport à l'autre, et deux déflecteurs les plus extérieurs sont reliés au corps de soupapes (100), respectivement, et un déflecteur intermédiaire est configuré pour être relié à la soupape de gonflage (210),

4. Mécanisme de limitation de pression de premier temps (10) selon l'une quelconque des revendications 1 à 3, dans lequel
la première chambre (120) est dotée à l'intérieur de celle-ci d'une première plateforme étagée (121), et
la première plateforme étagée (121) est configurée pour coopérer hermétiquement avec la soupape de premier temps (200), de manière à fermer la première chambre (120) ; et
la seconde chambre (140) est dotée à l'intérieur de celle-ci d'une seconde plateforme étagée (141),
et la seconde plateforme étagée (141) est configurée pour être ajustée hermétiquement sur la soupape de gonflage (210), de manière à fermer la seconde chambre (140).

5. Mécanisme de limitation de pression de premier temps (10) selon l'une quelconque des revendications 1 à 4,
dans lequel le mécanisme de limitation de pression de premier temps (10) comprend en outre un ressort de premier temps (220) et un ressort de gonflage (230), dans lequel deux extrémités du ressort de premier temps (220) sont reliées au corps de soupapes (100) et à la soupape de premier temps (200), respectivement, et deux extrémités du ressort de gonflage (230) sont reliées à la soupape de premier temps (200) et à la soupape de gonflage (210), respectivement.

6. Mécanisme de limitation de pression de premier temps (10) selon l'une quelconque des revendications 1 à 5,
dans lequel le mécanisme de limitation de pression de premier temps (10) comprend en outre une tige de soupapes (240), et la soupape de premier temps (200) et la soupape de gonflage (210) sont toutes deux fournies sur la tige de soupapes (240), et une extrémité de la tige de soupapes (240) passant à travers la soupape de gonflage (210) vient en butée contre l'élément de limitation de pression (250),

7. Mécanisme de limitation de pression de premier temps (10) selon la revendication 6,
dans lequel le corps de soupapes (100) est doté d'un passage de guidage, et le passage de guidage fait communiquer la seconde chambre (140) avec la chambre de limitation de pression (170) ; une extrémité de la tige de soupapes (240) à l'opposé de la soupape de gonflage (210) est fournie de manière coulissante dans le passage de guidage, et un interstice faisant communiquer la seconde chambre (140) avec la chambre de limitation de pression (170) est formé entre la tige de soupapes (240) et le passage de guidage.

8. Mécanisme de limitation de pression de premier temps (10) selon l'une quelconque des revendications 1 à 7,
dans lequel le mécanisme de limitation de pression de premier temps (10) comprend en outre un premier siège de limitation de pression (300) et un premier ressort de limitation de pression (310), dans lequel le premier siège de limitation de pression (300) est fixé à un côté de l'élément de limitation de pression (250) à l'opposé de la chambre de limitation de pression (170), et deux extrémités du premier ressort de limitation de pression (310) sont reliées au premier siège de limitation de pression (300) et au corps de soupapes (100), respectivement ; le premier siège de limitation de pression (300) est configuré pour, lorsqu'il est entraîné par l'élément de limitation de pression (250) pour se trouver dans une première position prédéfinie, permettre à la première chambre (120) et à la seconde chambre (140) d'être simultanément dans un état ouvert ; ou le premier siège de limitation de pression (300) est configuré pour, lorsqu'il est entraîné par l'élément de limitation de pression (250) pour se trouver dans une deuxième position prédéfinie, permettre à la première chambre (120) d'être dans un état fermé et à la seconde chambre (140) d'être dans un état ouvert.

9. Mécanisme de limitation de pression de premier temps (10) selon la revendication 8,
dans lequel le mécanisme de limitation de pression de premier temps (10) comprend en outre un second siège de limitation de pression (320) et un second ressort de limitation de pression (330), dans lequel le second siège de limitation de pression (320) est fourni entre le premier siège de limitation de pression (300) et le corps de soupapes (100), et deux extrémités du second ressort de limitation de pression (330) sont reliées au second siège de limitation de pression (320) et au corps de soupapes (100), respectivement ; le second siège de limitation de pression (320) est configuré pour, lorsqu'il est entraîné par l'élément de limitation de pression (250) pour être déplacé conjointement avec le premier siège de limitation de pression (300) jusqu'à une troisième position prédéfinie, permettre à la première chambre (120) et à la seconde chambre (140) d'être simultanément dans un état fermé,

10. Mécanisme de limitation de pression de premier temps (10) selon la revendication 9,
dans lequel le second siège de limitation de pression (320) et le premier siège de limitation de pression (300) sont agencés à intervalles ; le premier siège de limitation de pression (300) est configuré pour venir en butée contre le second siège de limitation de pression (320) sous l'entraînement de l'élément de limitation de pression (250), de manière à se déplacer jusqu'à la troisième position prédéfinie de façon synchronisée sur le second siège de limitation de pression (320).

11. Mécanisme de limitation de pression de premier temps (10) selon la revendication 9 ou 10,
dans lequel le mécanisme de limitation de pression de premier temps (10) comprend en outre un siège de réglage de limitation de pression (340), le siège de réglage de limitation de pression (340) est fourni de manière rotative dans le corps de soupapes (100), et le siège de réglage de limitation de pression (340) est configuré pour régler une distance entre le siège de réglage de limitation de pression (340) et l'élément de limitation de pression (250) durant la rotation par rapport au corps de soupapes (100) ; une extrémité du premier ressort de limitation de pression (310) à l'opposé du premier siège de limitation de pression (300) est reliée au siège de réglage de limitation de pression (340), et une extrémité du second ressort de limitation de pression (330) à l'opposé du second siège de limitation de pression (320) est reliée au siège de réglage de limitation de pression (340),

12. Système de frein pneumatique, **caractérisé en ce que**
le système de frein pneumatique comprend le mécanisme de limitation de pression de premier temps (10) selon l'une quelconque des revendications 1 à 11.
